# EUROPÄISCHE PATENTSCHRIFT

(11) **EP 2 683 955 B1**
(45) Veröffentlichungstag und Bekanntmachung des Hinweises auf die Patenterteilung: **05.10.2016**
(21) Anmeldenummer: 12702537.7
(22) Anmeldetag: 03.02.2012
(51) Int. Cl.: F16C 17/02, F16C 9/02, F16C 33/10

(54) **GLEITLAGERSCHALE**
PLAIN BEARING HALF LINER
COQUILLE DE COUSSINET LISSE

(30) Priorität: 11.03.2011 DE 102011005466
(43) Veröffentlichungstag der Anmeldung: 15.01.2014
(73) Patentinhaber: Federal-Mogul Wiesbaden GmbH, 65201 Wiesbaden (DE)
(72) Erfinder: LEHMANN, Uwe, 55232 Alzey (DE); GROOTEBOER, Thomas, 55270 Essenheim (DE)
(74) Vertreter: Mehler Achler
(86) Internationale Anmeldenummer: PCT/EP2012/051876
(87) Internationale Veröffentlichungsnummer: WO 2012/123186

(56) Entgegenhaltungen:
- WO-A1-2007/006291
- DE-A1- 2 617 843
- DE-A1-102005 009 470
- DE-A1-102005 030 307
- JP-U- 63 042 842
- US-B1- 6 225 720

## Beschreibung

Die Erfindung betrifft eine Gleitlagerschale für ein Kurbelwellenhauptlager. Bekannte Gleitlagerschalen dieser Art weisen eine radiale Ölbohrung und eine mit der Ölbohrung kommunizierende, in Umfangsrichtung verlaufende und in axialer Richtung meist mittig in die auf der Innenseite der Gleitlagerschale angeordnete Gleit- oder Lauffläche eingebrachte Ölnut auf. Das Öl wird durch ein Leitungssystem in dem Motorgehäuse unter Druck zum Kurbelwellenhauptlager transportiert, und gelangt dort durch die Ölbohrung in die Ölnut, in der es einerseits zur Schmierung und Kühlung des Hauptlagers selbst in Umfangsrichtung verteilt und von der aus es andererseits über eine Verbindungsbohrung in der Kurbelwelle dem Pleuellager zugeführt wird. Um Einbautoleranzen auszugleichen und damit sicher gestellt ist, dass die Mündung der Ölleitung in dem Motorgehäuse mit der Ölbohrung in der Gleitlagerschale fluchtet, ist die Ölbohrung in manchen Fällen auch als Langloch ausgeführt.

Das Kurbelwellenhauptlager ist aus zwei halbzylindrischen Gleitlagerschalen zusammengesetzt, von denen meist nur die obere eine solche Ölnut aufweist. Beide Gleitlagerschalen weisen jeweils an ihren umfänglichen Enden so genannte Freilegungen auf. Das sind Bereiche auf der Innenseite vor den umfänglichen Enden beider Gleitlagerschalen, in denen die Gleitfläche wenige µm radial zurückgesetzt ist, wodurch eine etwaige radiale Passungenauigkeit zweier zu einem Radiallager zusammengesetzter Gleitlagerschalen kompensiert werden kann. Durch diese radiale Aufweitung kann es jedoch zu einem vermehrten seitlichen (axialen) Ölabfluss aus dem Hauptlager kommen. Dieser ist schädlich, da er den benötigten Öldruck vermindert und den Ölbedarf erhöht, was durch größere Ölpumpen kompensiert werden müsste.

Mit den Angaben "in Umfangsrichtung", "axial" und "radial" wird hierin stets auf die Lagergeometrie Bezug genommen.

Um dies zu vermeiden, enden die Ölnuten bei den neueren Lagerschalen dieses Typs häufig in Umfangsrichtung vor den Freilegungen. Die Ölnuten werden bei dieser Bauform durch spanende Bearbeitung, in der Regel durch Fräsen, dergestalt in die Gleitlagerschale eingebracht, dass sie im Scheitelpunkt derselben ihre maximale Tiefe aufweisen und in Umfangsrichtung zu den Enden hin meist stetig auslaufen. Die spanende Bearbeitung erfolgt im Allgemeinen an der bereits umgeformten Lagerschale. Andere bekannte Maßnahmen, dem axialen Ölaustritt entgegenzuwirken, sind beispielsweise der Versuch, das Lagerspiel zu verkleinern, der Ersatz der Freilegungen durch tiefere Bearbeitungsrillen oder das Einvulkanisieren oder Einlegen von Elastomerringen zur Abdichtung des Lagers am axial äußeren Lagerumfang. Aus einer Vielzahl von Veröffentlichungen mit diesem Inhalt wird beispielhaft auf die DE 10 2005 009 470 A1, die US 6,491,438 B1 oder die DE 10 2005 011 372 A1 verwiesen. Alle genannten Maßnahmen sind grundsätzlich geeignet, das benötigte Ölvolumen zu verringern. Alle diese Maßnahmen einschließlich der vor den Enden auslaufenden Teilnuten haben jedoch einen erhöhten Bearbeitungsaufwand und somit erhöhte Kosten zur Folge.

Die GB 607,400 offenbart eine Gleitlagerschale nach dem Oberbegriff des Anspruchs 1.

Aufgabe der vorliegenden Erfindung ist es demgemäß, eine Gleitlagerschale für ein Kurbelwellenhauptlager bereitzustellen, welche eine gute Versorgung des Kurbelwellenhauptlagers und des Pleuellagers mit Öl sicherstellt, bei der der seitliche Ölabfluss so gering wie möglich ausfällt und die kostengünstig herstellbar ist.

Die Aufgabe wird durch eine Gleitlagerschale mit den Merkmalen des Patentanspruchs 1 gelöst.

Die erfindungsgemäße Gleitlagerschale für ein Kurbelwellenhauptlager weist einen sich in Umfangsrichtung über einen Winkel von 90° bis 170° erstreckenden, an beiden umfänglichen Enden der Gleitlagerschale geschlossenen und die Gleitlagerschale radial durchsetzenden Schlitz und eine ansonsten ölnutfreie Gleitfläche auf ihrer Innenseite auf.

Der Schlitz ist an beiden umfänglichen Enden der Gleitlagerschale geschlossen, d.h. dass er sich auf keiner Seite bis in die Teilfläche der Gleitlagerschale erstreckt, wodurch ein ungewollter Ölabfluss über die Teilflächen vermindert wird.

Die Vorteile dieser Lösung sind zahlreich. Die Fertigung vereinfacht sich, da der Schlitz beispielsweise beim Stanzen des Bandes in einem Arbeitsschritt oder beim Umformen der Lagerschale in einem Folgeverbundwerkzeug ohne Umspannen des Werkstücks eingebracht werden kann. Der separate Arbeitsschritt einer spanenden Bearbeitung kann entfallen und es werden somit Kosten uns Zeit gespart.

Da sich der Schlitz radial durch die ganze Lagerschale erstreckt, stellt er im Vergleich zu einer Nut gleicher Breite und Länge ein größeres Volumen für ein Ölreservoir zu Verfügung. Das größere Ölvolumen kommt insbesondere Start-Stopp-Anwendungen moderner Verbrennungsmotoren für die Automobilindustrie zugute. Es wird unmittelbar an der Stelle bereit gehalten, wo es benötigt wird, so dass beim Starten des Motors bis zum Aufbau eines ausreichenden Öldrucks keine Zeit vergeht und eine größere Ölmenge für die Schmierung des Lagers zur Verfügung steht. Dabei ist die erfindungsgemäße Lösung gerade deshalb vorteilhaft, weil das größere Ölvolumen nicht zu Lasten des Tragflächenanteils der Gleitlagerschale geht.

Auch im laufenden Betrieb erweist sich der Schlitz als vorteilhaft, da er im Vergleich zu einer Nut gleicher Breite neben dem größeren Ölvolumen auch einen größeren Strömungsquerschnitt bereitstellt. Der Schlitz setzt dem Öl deshalb einen geringeren Strömungswiderstand entgegen als eine vergleichbare Nut. Dies ist wichtig, da die Ölbohrung zur Versorgung des Pleuellagers in der Kurbelwelle im Betrieb relativ zum Hauptlager umläuft und ein ausreichender Ölvolumenstrom somit an jeder Umfangstelle des Schlitzes, bzw. der Ölnut sichergestellt sein muß. Auch ist eine geringere Drosselwirkung im Übergang von der Ölversorgungsbohrung in dem Lagergehäuse in die Gleitlagerschale festzustellen. Hierzu trägt die gegenüber einer (flachen) Ölnut größere radiale Abmessung (auch Tiefe) des Schlitzes bei, da das aus der Mündung der Ölleitung im Wesentlichen senkrecht in das Lager einströmende Öl nicht sofort auf die Welle prallt und deshalb nicht so scharf umgelenkt werden muss.

Schließlich kann mit der erfindungsgemäßen Gleitlagerschale auch eine Gewichtsersparnis erzielt werden, was im Hinblick auf eine Senkung des Kraftstoffverbrauches grundsätzlich eine vorteilhafte Eigenschaft darstellt.

Bevorzugt erstreckt sich der Schlitz in Umfangsrichtung nur über einen Winkel von 130° bis 65°. Ganz besonders bevorzugt endet der Schlitz bei einer Gleitlagerschale, die auf ihrer Innenseite jeweils eine Freilegung vor jedem ihrer umfänglichen Enden aufweist, in Umfangsrichtung vor beiden Freilegungen.

Auf diese Weise ist sichergestellt, dass das Öl sich in Umfangsrichtung über einen möglichst großen Winkelbereich nahezu ungehindert verteilt, ohne jedoch unmittelbar in den Freilegungsbereich vor den umfänglichen Enden der Lagerschale einströmen zu können. Somit ist einerseits eine ausreichende Schmierung und Kühlung des Hauptlagers und ein über einen großen Winkelbereich ungehinderter Ölstrom durch die Verbindungsbohrung in der Kurbelwelle zum Pleuellager sichergestellt. Andererseits wird der Ölverlust durch axialen Ölabfluss minimiert, so dass der Ölstrom und somit die Ölpumpe so dimensioniert werden können, dass sie nur den tatsächlich zu Schmierungs- und Kühlungszwecken benötigten Bedarf bereitstellen.

Vorteilhaft ist es, wenn der Schlitz sich auf seine beiden umfänglichen Enden zulaufend in axialer Richtung verjüngt.

Diese Verjüngung (konischer Bereich) hat umformtechnische Vorteile und ist dann zu bevorzugen, wenn der Schlitz bereits vor dem Umformen der Platine zu der halbzylindrischen Lagerschale vorhanden ist. Durch die Verjüngung wird eine Vergleichmäßigung der durch den Schlitz hervorgerufenen Steifigkeitsveränderung in Umfangsrichtung erzielt. Dies bietet Vorteile, wenn die Lagerschale, wie allgemein üblich, aus einer ebenen Platine durch einen Umformprozess hergestellt wird, da die Gefahr einer ungewollten Deformierung der durch den Schlitz geschwächten Lagerschale verringert wird. Zusätzlich kann durch diese Verjüngung die Ölmenge, welche in die Ölbohrung der Kurbelwelle einströmt, so beeinflusst werden, dass diese Ölmenge zeitlich gesehen mit Beginn der Überdeckung zwischen Ölbohrung und Schlitz allmählich zunimmt. Dies ist oft von Vorteil, da ein abrupter Ölstrom zu Kaviations- oder Erosionsschäden in den Gleitlagern führen kann. Die Verjüngung kann grundsätzlich in linearer Form, in Form einer Parabel oder einer anderen Funktion, bevorzugt aber stetig ausgestaltet sein.

Besonders bevorzugt beginnt die Verjüngung in einem Bereich von 30° bis 60° von dem jeweiligen umfänglichen Ende der Lagerschale.

Ebenfalls bevorzugt sind die umfänglichen Enden des Schlitzes verrundet.

Eine runde Kontur, z.B. mit einem Radius der halben Schlitzbreite unmittelbar vor dem umfänglichen Ende der Nut, verringert den Werkzeugverschleiß am Stanzwerkzeug und sorgt ebenfalls für eine gleichmäßigere Kraftverteilung beim Umformen.

Alternativ oder zusätzlich ist es vorteilhaft, wenn sich der Schlitz auf den Scheitelpunkt der Lagerschale zulaufend in axialer Richtung verjüngt.

Abgesehen von etwaigen Verjüngungen an den Enden des Schlitzes, weist dieser in Umfangsrichtung gesehen zunächst einen weiten Bereich (Aufweitung) auf, in dem ein größeres Ölvolumen bereitsteht, und verjüngt sich danach zu einem schmaleren Bereich (Einschnürung), der zwar einen ausreichenden Ölstrom sicherstellt, aber kein so großes Ölvolumen mehr bereithält. Wenn die Mündung der Verbindungsbohrung in der Kurbelwelle bei deren Drehung über den Schlitz streicht, wird diese zunächst mit dem größeren Ölreservoir innerhalb des Schlitzes verbunden, so dass ausreichend Öl in kurzer Zeit zu dem Pleuellager strömen kann. Ist das Pleuellager auf diese Weise versorgt, genügt es, wenn auf dem Weg zum Scheitelpunkt weniger Öl bereitsteht. Das Reservoir in dem Schlitz wird dann wieder aufgefüllt.

Die Schlitzform kann auf diese Weise allgemein dem Ölbedarf am Pleuellager angepasst werden. Es ist deshalb grundsätzlich nicht ausgeschlossen, dass die Schlitzlänge und/oder der Schlitzbreitenverlauf asymmetrisch bezogen auf den Scheitelpunkt der Lagerschale ausgeführt ist. Die konkrete Anpassung an den Ölbedarf im Pleuellager erfolgt unter anderem unter Berücksichtigung der Lage der Mündung der Verbindungsbohrungen in der Kurbelwelle.

Bevorzugt nimmt der Schlitz einen Flächenanteil F_{S} an der gesamten Gleitfläche F_{G} von 12% bis 28% und besonders bevorzugt von 14% bis 25% ein.

Bei diesem Verhältnis hat sich das Verhältnis aus Ölversorgung einerseits und Tragflächenanteil der Gleitfläche andererseits als optimal herausgestellt.

Der Schlitz wird gemäß einer Ausgestaltung der Erfindung durch einen oder mehrere Stege überbrückt, wobei die Stege in der Summe einen Flächenanteil F_{St} aufweisen, der nicht mehr als 20% und bevorzugt nicht mehr als 10% des Flächenanteils F_{S} des Schlitzes einschließlich der Stege ausmacht.

Als Steg wird ein im Wesentlichen in axialer Richtung verlaufender, den Schlitz überbrückender Materialabschnitt der Lagerschale bezeichnet, der den Schlitz, jedenfalls in der Draufsicht betrachtet, in zwei Hälften teilt. Auch wenn der Schlitz durch den oder die Stege in zwei oder mehrere Abschnitte geteilt ist, wird hiernach von nur einem Schlitz gesprochen. Der Winkel, den der Schlitz erfindungsgemäß überspannt, wird von den beiden äußeren Enden der beiden äußeren Abschnitte gemessen. Die Schlitzabschnitte unterscheiden sich von einer Anordnung zweier umfänglich beabstandeter Bohrungen oder auch Langlöcher, wie sie beispielsweise aus der Schrift US 6,491,438 B1 bekannt ist, in erster Linie durch das Verhältnis zwischen dem Flächenanteil (oder der Länge) der Stege zu dem Flächenanteil (oder der Länge) des gesamten Schlitzes einschließlich der Stege. Der Anteil der Stege ist bei der erfindungsgemäßen Lagerschale erheblich geringer als bei allen bekannten Lagerschalen.

Wird der Schlitz bereits vor dem Umformen der Platine zur Lagerschale in diese eingebracht, erhöht neben der abnehmenden Schlitzbreite im Endbereich des Schlitzes auch die Anordnung eines oder mehrerer solcher Stege die Stabilität der Gleitlagerschale bzw. Platine insbesondere beim Umformen der Platine zu einer Lagerschale. Stege sind daher vor allem an Schwachstellen bzw. Stellen besonders hoher Belastung bei der Umformung vorzusehen. Der oder die Stege können daher in vielen Fällen nach dem Umformen in einem weiteren Arbeitsgang wieder entfernt werden. Der Steg oder die mehreren Stege sind vorzugsweise die in radialer Richtung flacher als die Materialstärke D (auch Dicke) der Gleitlagerschale.

Der Steg oder die Stege erstrecken sich hierbei nicht über die gesamte Dicke der Gleitlagerschale, so dass die Abschnitte des Schlitzes vor und hinter dem Steg in dem Bereich des Steges nutartig verbunden sind. Diese nutartige Verbindung soll ausdrücklich nicht im Sinne des Erfindungsgegenstandes von dem Begriff der "ansonsten ölnutfreien Gleitfläche" ausgeschlossen werden, solange der Flächenanteil F_{St} des Steges (und damit die Länge der nutartigen Verbindung) in dem vorstehend angegebenen Maße kleiner ist als der Flächenanteil F_{S} des gesamten Schlitzes. Hergestellt werden die Stege dieser Gestalt vorzugsweise, indem die nach dem Ausstanzen der Schlitzabschnitte verbleibenden Stege in einem Prägevorgang in ihrer Höhe, also radial reduziert werden. Der oder die Stege schließen bevorzugt auf der der Gleitfläche radial gegenüber liegenden Außenseite bündig mit dem Lagerrücken der Gleitlagerschale ab. Die Höhe des Steges ist bevorzugt so weit reduziert, dass die Querschnittsfläche der gebildeten nutartigen Verbindung den von der Lageranwendung geforderten Ölstrom ermöglicht.

Der Schlitz weist eine maximale Breite B auf, wobei das Verhältnis aus der maximalen Breite B zu der Dicke oder Materialstärke D der Gleitlagerschale von 1,5 bis 3,5 beträgt.

In diesem Bereich stellt sich ein ausreichend günstiges Strömungsverhalten des Öls ein. Wie weiter oben ausgeführt, ist der Strömungsquerschnitt und das Ölvolumen des Schlitzes verglichen mit dem einer Nut gleicher Breite größer. Will man denselben Querschnitt und dasselbe Volumen bei der Nut erreichen, müsste diese verbreitert werden. Dabei reduziert sich der Strömungswiderstand aber nicht im gleichen Maße, wie die Querschnittsfläche zunimmt, was auf Oberflächeneffekte zurückzuführen ist. Deshalb, so haben die Erfinder erkannt, ist es günstig den Querschnitt zu Gunsten der Tiefe der Ölleitung zu vergrößern, wohingegen die Breite nicht beliebig vergrößert werden kann. Dies nicht zuletzt auch deswegen, weil mit zunehmenden Nut-/Schlitzbreite der Tragflächenanteil der Lagerschale abnimmt. Da die Materialstärke D der Gleitlagerschale und damit die Tiefe des Schlitzes durch deren Bauart vorgegeben ist, hat sich eine maximale Breite als bevorzugt herausgestellt, die kleiner oder gleich dem 3,5-fachen der Materialstärke D und größer oder gleich dem 1,5-fachen der Materialstärke D ist. Besonders bevorzugt ist die Breite des Schlitzes selbst in Bereichen von Einschnürung größer als die Materialstärke D bzw. Tiefe des Schlitzes, um durch solche Einschnürungen keine zu hohen Druckverluste in der Ölleitung zu erzeugen.

Diese und weitere Vorteile und Merkmale der Erfindung werden nachfolgen anhand von Ausführungsbeispielen näher erläutert. Es zeigen:
- Fig.1: Ein Ausführungsbeispiel der erfindungsgemäßen Gleitlagerschale in perspektivischer Darstellung;
- Fig. 2: eine Abwicklung der Gleitlagerschale gemäß Fig. 1 in der Draufsicht;
- Fig. 3: eine Abwicklung eines zweiten Ausführungsbeispiels der Gleitlagerschale; dieses Beispiel gehört jedoch nicht zum Schutzumfang der Erfindung;
- Fig. 4: eine Abwicklung eines dritten Ausführungsbeispiels der Gleitlagerschale;
- Fig. 5: eine Abwicklung eines vierten Ausführungsbeispiels der Gleitlagerschale;
- Fig. 6A bis 6C: radiale Schnittdarstellungen einer Kurbelwellenanordnung mit dem erfindungsgemäßen Radialgleitlager in drei Stellungen;
- Fig. 7: ein Diagramm des Ölvorrates erfindungsgemäßer Lager im Vergleich mit bekannten Nutlagern;
- Fig. 8: ein Diagramm des Verhältnisses von Höhe zu Breite des Schlitzes erfindungsgemäßer Lager im Vergleich mit der Nut bekannten Lagen und

- Fig. 9: ein Diagramm des Druckverlustes in den erfindungsgemäßen Lagen im Vergleich mit bekannten Nutlagern.

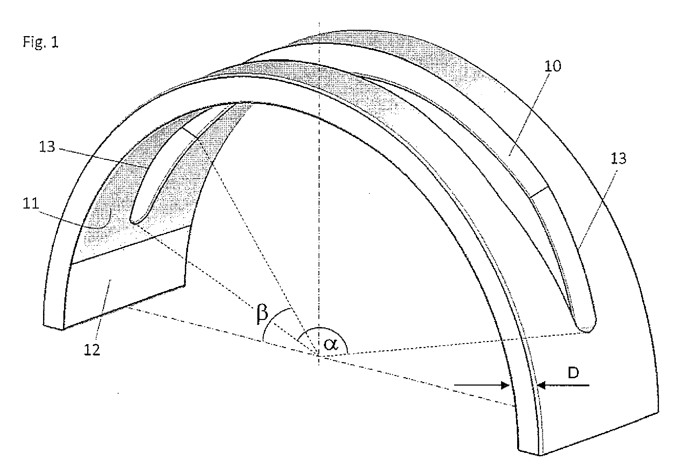

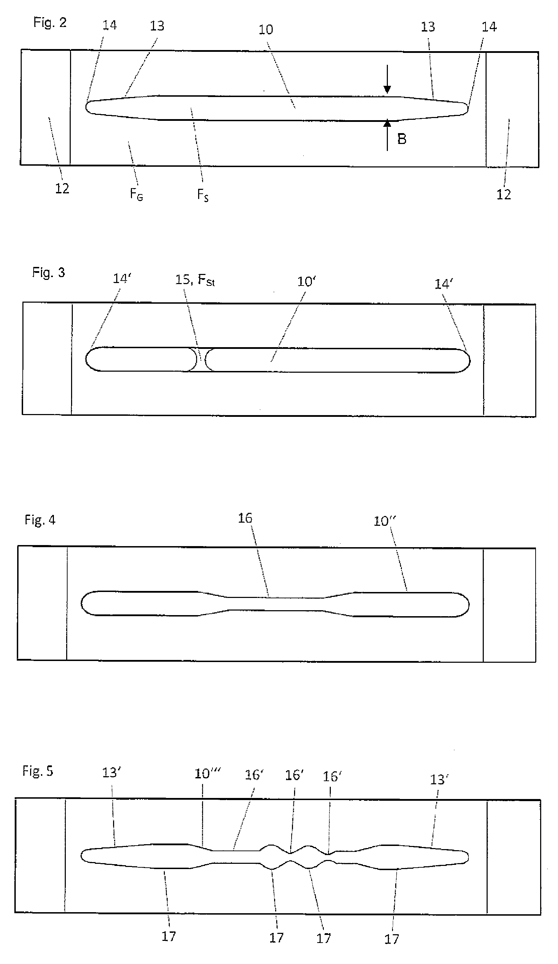

Die Figuren 1 und 2 zeigen ein Ausführungsbeispiel der erfindungsgemäßen oberen Gleitlagerschale eines Kurbelwellenhauptlagers mit einem sich in Umfangsrichtung über einen Winkel α erstreckenden, an den beiden umfänglichen Enden der Gleitlagerschale geschlossenen und die Gleitlagerschale radial durchsetzenden Schlitz 10. Der Winkel α beträgt vorzugsweise 90° bis 170°, besonders bevorzugt 130° bis 165°.

Auf ihrer Innenseite weist die Gleitlagerschale eine Gleitfläche 11 auf, welche im Betrieb im Kontakt mit dem Gegenläufer, also dem Wellenzapfen einer Kurbelwelle steht. Diese Gleitfläche 11 ist abgesehen von dem Schlitz 10 frei von Ölnuten. Unter "ölnutfrei" in dem Sinne dieser Schrift werden ferner auch solche Gleitflächen verstanden, welche beispielsweise durch den Bearbeitungsschritt des Bohrens umlaufende feine Bearbeitungsrillen aufweisen, welche mikroskopisch betrachtet zwar eine ölleitende Funktion haben können, aber nicht zur Verteilung des Öls in umfänglicher Richtung gedacht sind.

Die Gleitlagerschale weist ferner an jedem ihrer umfänglichen Enden jeweils eine Freilegung 12 auf. Es ist zu sehen, dass der Schlitz 10 in Umfangsrichtung auf beiden Seiten vor den Freilegungen 12 endet. In Figur 2 ist dieses Beispiel als Abwicklung dargestellt.

Der Schlitz 10 verjüngt sich in axialer Richtung auf seine beiden umfänglichen Enden 14 zulaufend. Es bilden sich hierdurch jeweils konische Bereiche 13 aus. Diese konischen Bereiche oder Verjüngungen 13 beginnen in einem Abstand vor dem umfänglichen Enden der Gleitlagerschale, welcher durch einen Winkel β angegeben wird, der vorzugsweise in einem Bereich von 30° bis 60° liegt. Zudem ist der Schlitz an seinen beiden umfänglichen Enden abgerundet. Die beiden genannten Maßnahmen haben fertigungstechnische Vorteile, wie oben erläutert.

Ferner eingezeichnet ist eine Dicke oder Materialstärke D der Gleitlagerschale 10.

Das Ausführungsbeispiel gemäß Figur 3 stellt eine strukturell einfachere Ausführungsform der erfindungsgemäßen Gleitlagerschale dar. Bei dieser hat der Schlitz 10' im Gegensatz zu dem Beispiel gemäß Figur 2 eine durchgehend gleichbleibende Breite, wobei auch hier die beiden umfänglichen Enden 14' abgerundet sind, d.h. genauer einen Radius der halben Schlitzbreite aufweisen.

Das nicht zur Erfindung gehörende Ausführungsbeispiel gemäß Figur 3 weist ferner einen Steg 15 auf, welcher exemplarisch nicht im Zentrum des Schlitzes angeordnet ist. Dieser Steg erstreckt sich nicht über die gesamte Dicke der Gleitlagerschale (senkrecht zur Darstellungsebene) sondern wird nach dem Ausstanzen des Schlitzes 10' in einem Prägevorgang im Querschnitt oder genauer in seiner Höhe reduziert. Der Steg 15 ist hiernach bevorzugt auf der der Gleitfläche radial gegenüberliegenden Außenseite des Lagerrückens der Gleitlagerschale angeordnet. Er dient der Stabilisierung der Gleitlagerschale während des Umformprozesses und/oder im Einsatz. Er kann je nach Zweck nach dem Umformen durch einen nachfolgenden Arbeitsschritt entfernt werden. Bereits aus Kostengründen kann es aber auch vorteilhaft sein, wenn dieser stehen bleibt. Dies setzt voraus, dass er in seiner Höhe so reduziert ist, dass der Querschnitt des Schlitzes an dieser Stelle den geforderten Ölstrom ermöglicht.

Anstelle eines Steges 15 können auch mehrere beabstandete Stege vorgesehen sein, die den Schlitz in drei oder mehrere Abschnitte unterteilen. Wichtig ist dabei nur, dass der oder die Stege 15 in der Summe einen Flächenanteil F_{St} aufweisen, der nicht mehr als 20% und bevorzugt nicht mehr als 10% des Flächenanteils F_{S} des Schlitzes beträgt, wobei der Flächenanteils F_{S} des Schlitzes 10 den Flächenanteil F_{St} des oder der Stege einschließt.

Ferner eingezeichnet ist eine Breite B des der Schlitzes 10, die an der breitesten Stelle des Schlitzes gemessen wird. Diese ist aufgrund vorstehend beschriebener Überlegungen in einem bestimmten Verhältnis zur Dicke D der Gleitlagerschale zu wählen.

Das Beispiel gemäß Figur 4 weist einen Schlitz 10" auf, der sich auf den Scheitelpunkt der Gleitlagerschale zulaufend in axiale Richtung verjüngt. Hierdurch entsteht eine Einschnürung 16 des Schlitzes 10" hier im Bereich des Scheitelpunktes. Die Verjüngung oder Einschnürung 16 erfolgt vorzugsweise stetig, kann jedoch auf der einen oder anderen Seite auch sprunghaft erfolgen. Die Verjüngung ist ferner symmetrisch zum Scheitelpunkt der Gleitlagerschale angeordnet, kann jedoch auch asymmetrisch angeordnet sein, wie das vierte Ausführungsbeispiel gemäß Figur 5 zeigt.

Hierin sind exemplarisch insgesamt vier weitere Schlitzabschnitte oder Aufweitungen 17 und drei dazwischen liegende Einschnürungen 16' vorgesehen. Ferner weist der Schlitz 10"' im Bereich seiner beiden umfänglichen Enden abermals Verjüngungen oder konische Bereiche 13" auf. Die Aufweitungen 17 sind in der Praxis so anzuordnen, dass ein Ölreservoir und/oder ein größerer Strömungsquerschnitt dort angeboten wird, wo es benötigt wird. Dies kann an mehreren Stellen über den Umfang der Gleitlagerschale der Fall sein, wie das Beispiel der Figur 5 verdeutlichen soll.

Diese Positionen müssen keineswegs über den Umfang gleichmäßig oder symmetrisch zum Scheitelpunkt verteilt sein. Einer symmetrischen Verteilung könnte jedoch im Hinblick auf eine erhöhte Sicherheit gegenüber Einbaufehlern der Lagerschale der Vorzug zu geben sein.

Wie schon weiter oben ausgeführt ist nicht nur die maximale Breite B bevorzugt kleiner oder gleich dem 3,5-fachen der Materialstärke D und größer oder gleich dem 1,5-fachen der Materialstärke D, sondern auch die Breite des Schlitzes in den Bereichen der Einschnürungen 16 oder 16' größer als die Materialstärke D bzw. Tiefe des Schlitzes, um auch an diesen Stellen keine zu hohen Druckverluste in der Ölleitung zu erzeugen.

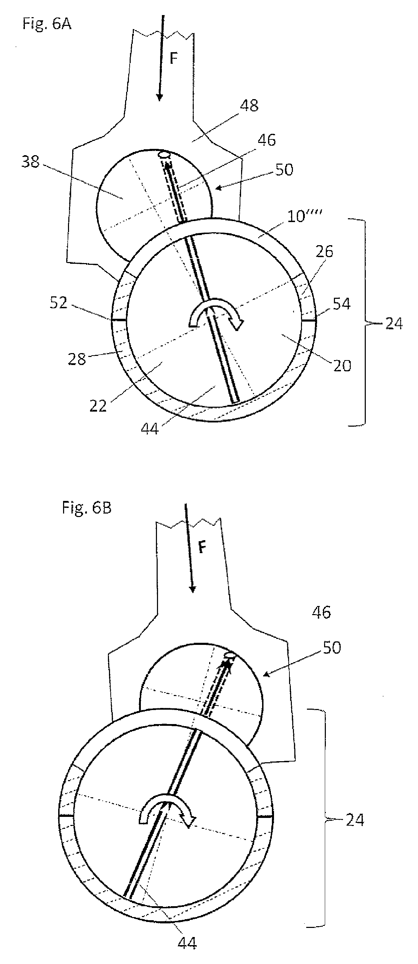

Wie die erfindungsgemäße Gleitlagerschale in einer Kurbelwellenanordnung wirkt, wird anhand der Figuren 6A bis 6C beschrieben. Diese zeigen alle dieselbe Kurbelwellenanordnung in einem Radialschnitt. Genauer ist eine Kurbelwelle 20 darin jeweils in zwei überlagerten Radialschnitten gezeigt, nämlich einmal geschnitten in axialer Höhe eines Wellenzapfens 22 der Kurbelwelle 20 und einmal in Höhe eines Hubzapfens 38 der Kurbelwelle 20. Dementsprechend sind im Vordergrund, das den Wellenzapfen 22 umschließende Kurbelwellenhauptlager 24 und im Hintergrund ein Pleuel 48 mit dem den Hubzapfen 38 umgreifenden großen Pleuelauge 50 zu sehen. Die Figuren 6A bis 6C zeigen die Kurbelwelle 20 in drei unterschiedlichen Winkelstellungen.

Das Kurbelwellenhauptlager 24 besteht im Übrigen aus 2 Gleitlagerschalen, der erfindungsgemäßen oberen Gleitlagerschale 26 und der unteren Gleitlagerschale 28, welche mit ihren Teilflächen 52, 54 aneinander anliegen. Die untere Gleitlagerschale 28 ist als Glattlager ohne Nut und ohne Schlitz ausgebildet. Die erfindungsgemäße obere Gleitlagerschale 26 weist in Umfangsrichtung den Schlitz 10"" auf.

Durch den Wellenzapfen 22 verläuft radial eine Verbindungsbohrung 44, welche mit dem Schlitz 10"" kommuniziert. Diese Bohrung verläuft schräg zur Darstellungsebene durch eine Kurbelwange der Kurbelwelle und setzt sich in einem Bohrungsabschnitt 46 durch den Hubzapfen 38 fort und verbindet das Hauptlager 24 fluidisch mit dem Lager des großen Pleuelauges 50, um letzteres mit Öl zu versorgen. Selbstverständlich sind auch andere Bohrungsanordnungen in der Kurbelwelle denkbar und auch bekannt, die je nach Lage der Mündung, einen Einfluss auf die konkrete Ausgestaltung des Schlitzes in der erfindungsgemäßen Gleitlagerschale haben können.

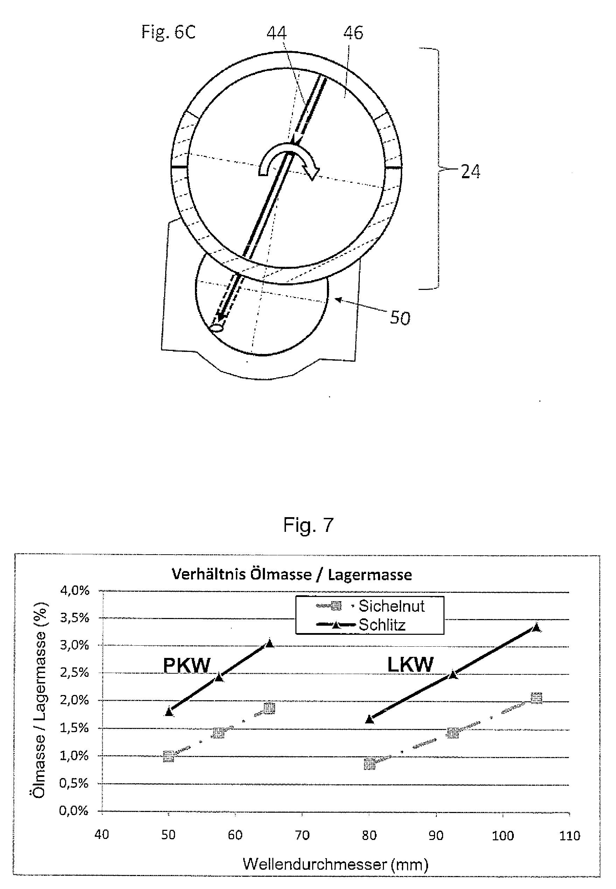

Das Kurbelwellenhauptlager 24 ist in den Darstellungen der Figuren 6A-6C ortsfest, während sich bei der Umdrehung der Kurbelwelle 20 die Sammelbohrung 44 im Urzeigersinn dreht. Dabei überstreicht die Mündung der Verbindungsbohrung 44 die Gleitflächen der oberen und unteren Lagerschalen. Während die Mündung der Verbindungsbohrung 44 den Schlitz 10"" in der oberen Lagerschale 26 passiert, ist das Pleuellager mit dem Ölvolumen des Schlitzes verbunden. Überstreicht nach einer halben Umdrehung der Kurbelwelle die Mündung der Verbindungsbohrung 44 die glatte Oberfläche der unteren Gleitlagerschale 28, vergleiche Figur 6B mit Figur 6C, findet kein Ölfluss zum Pleuellager statt.

Wenn sich, wie in dem hier gezeigten Beispiel, der Schlitz 10"" über nahezu den gesamten Umfang der oberen Gleitlagerschale erstreckt, ist ein quasi-kontinuierlicher Ölstrom zu dem Pleuellager über den halben Zyklus gewährleistet. Ein Ölstrom über einen beinahe vollen Zyklus könnte auf einfache Weise dadurch hergestellt werden, dass die Verbindungsbohrung 44 einen zweiten Zweig mit einer zweiten, der ersten gegenüberliegenden Mündung in der Schnittebene durch den Wellenzapfen aufweist, die den Schlitz 10 "" genau um 180° phasenverschoben zu der ersten Mündung überstreicht.

Anhand der Diagramme in den Figuren 7 bis 9 in Verbindung mit der nachfolgenden Tabelle werden die strömungstechnischen Vorteile der erfindungsgemäßen Gleitlagerschale mit Schlitz gegenüber einer herkömmlichen Gleitlagerschale mit Nut (Vergleichsgleitlager) dargelegt. Angenommen werden je drei Kurbelwellenhauptlager für einen PKW-Motor und für einen LKW-Motor mit typischen Abmessungen. Der Wellendurchmesser bezieht sich auf den Wellenzapfen, der in dem Kurbelwellenhauptlager gelagert wird. Die Begriffe Gesamtwanddicke D, Lagerbreite, Lagervolumen und Lagergleitfläche beziehen sich auf die Abmessungen der oberen Gleitlagerschale. Diese Angaben sind für das erfindungsgemäße Gleitlager mit Schlitz und das Vergleichsgleitlager mit Nut gleich.

Auch bei der Nut- und Schlitzbreite B sowie der Erstreckung in Umfangsrichtung wurde jeweils von gleichen Werten ausgegangen, wobei für das Vergleichsgleitlager eine auslaufende Nut mit beidseitig zu den Enden hin abnehmender Tiefe angenommen wurde. Hierfür wurde beidseitig ein typischer Anfangsradius von 20 mm gewählt. Die maximale Nuttiefe T zwischen den beiden auslaufenden Endabschnitten ist jeweils angegeben. Die Schlitztiefe der erfindungsgemäßen Gleitlagerschale entspricht freilich durchgängig der jeweiligen Gesamtwanddicke D der Lagerschale.

Bereits im Vergleich der Volumina zeigt sich ein Vorteil für die erfindungsgemäße Gleitlagerschale, die je nach Lagergröße zwischen dem 1,6-fachen und dem 2-fachen des Vergleichslagers an Öl bereithält. Noch deutlicher fällt das Ergebnis zugunsten des erfindungsgemäßen Lagers aus, wenn man die Masse des bereitgehaltenen Öls im Verhältnis zu der Lagermasse jeweils beider Lagertypen gegenüberstellt, vgl. auch das Diagramm in Figur 7. Dieser Quotient ist besonders interessant, da neben der Ölversorgung auch die Gewichtseinsparung im modernen Motorenbau von stets wachsender Bedeutung ist.

Insgesamt hat es sich im Hinblick auf eine ausreichende Ölversorgung, insbesondere in einem Start-Stop-Betrieb, als vorteilhaft erwiesen, wenn der Flächenanteil des Schlitzes F_{S} an der Gesamtgleitfläclle F_{G} zwischen 12% und 28%, besonders bevorzugt zwischen 14% und 25% liegt.

Der hydraulische (Ersatz-)Durchmesser ergibt sich als Rechengröße, indem die angenommene Querschnittsfläche unter Berücksichtigung der Querschnittsform in eine strömungstechnisch äquivalente Kreisfläche umgerechnet wird, siehe Dubbel, Taschenbuch für den Maschinenbau, 19. Auflage, B50, Abschnitt 6.2.3. Bereits hier fließt also das Verhältnis aus Tiefe zu Breite des Schlitzes bzw. der Nut ein.

Der Öldurchfluss ist ein typischer Wert für die jeweiligen Anwendungsbedingungen der aufgeführten Lager und wird bei gleicher Lagergröße für das Vergleichslager und das erfindungsgemäße Lager gleichermaßen zu Grunde gelegt.

Die Strömungsgeschwindigkeit ist aus dem angegeben Öldurchfluss und den Querschnitten abgeleitet. Auch hier zeichnet sich ein erheblicher Vorteil für die erfindungsgemäße Gleitlagerschale mit Schlitz ab, bei der die Strömungsgeschwindigkeiten um einen Faktor 0,5 bis 0,7 unter denen des Vergleichslagers liegen.

Das wirkt sich entsprechend auf die errechnete Reynoldszahl und somit auf den Strömungszustand aus, wobei ansonsten wiederum jeweils die gleichen Randbedingungen vorausgesetzt wurden. Diese waren bei den PKW-Lagern eine Öldichte von 0,7784 kg/L und eine dynamische Ölviskosität von 4,484e-09 Ns/mm² und bei den LKW-Lagern eine Öldichte von 0,7864 kg/L und eine dynamische Ölviskosität von 6,25e-09 Ns/mm². Klar erkennbar wird, dass sich bereits bei Lagern kleinerer Abmessung in den erfindungsgemäßen Lagern laminare Strömungsverhältnisse in dem Schlitz ausbilden, während bei den herkömmlichen Lagern mit Nut noch turbulente Strömungen vorherrschen, die wiederum Einfluss auf die Rohrreibungszahl und damit schließlich auf den Druckverlust in der Ölleitung durch die Lagerschale haben. Dabei wird im Fall von turbulenter Strömung die Annahme eines hydraulisch glatten Querschnitt getroffen, vgl. Dubbel, Taschenbuch für den Maschinenbau, 19. Auflage, B49, Abschnitt 6.2.2.

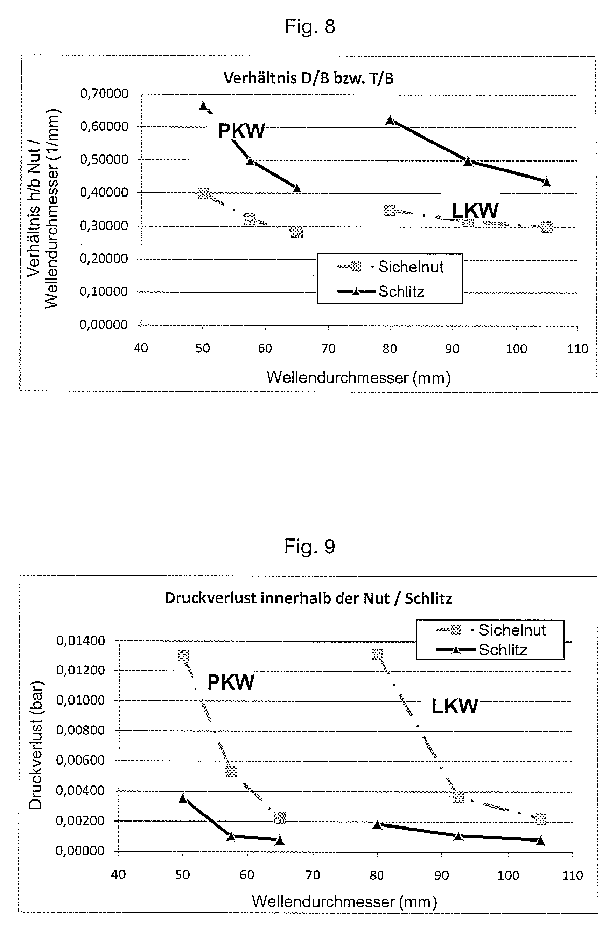

Zur Berechnung der Rohrreibungszahl wird zunächst der Beiwert phi ermittelt, vgl. Dubbel, Taschenbuch für den Maschinenbau, 19. Auflage, B50, Abschnitt 6.2.3. In diesen fließt wiederum das Verhältnis aus Breite B zu Tiefe D des Schlitzes ein, welches erfindungsgemäß bevorzugt einen Wert von 1,5 bis 3,5 einnehmen soll und sich erheblich von dem Verhältnis aus Tiefe T und Breite B der Nut bekannter Nutlagern abgrenzt. Zur Illustration ist dieses Verhältnis in Figur 8 für das erfindungsgemäße Lager dargestellt und dem Verhältnis bekannter Nutlager der jeweils gleichen Dimension gegenüber gestellt.

Unter Annahme laminarer Strömung (Reynoldszahl < 2300) und turbulenter Strömung (Reynoldszahl > 2300) wird dann der Druckverlust aus Rohrreibung dp gemäß Gleichung 11 a aus Dubbel, Taschenbuch für den Maschinenbau, 19. Auflage, B48, Abschnitt 6.2 berechnet. Der Druckverlust in der Ölleitung durch die Nut der erfindungsgemäßen Gleitlagerschale beträgt je nach Lagerdimension vorzugsweise weniger als 3,55 mbar und bei Lagern mittlerer Größe (Wellendurchmesser über 55 mm) bevorzugt sogar weniger als 2 mbar, wie auch der Figur 9 zu entnehmen ist. Jedenfalls kann der Druckverlust aufgrund der erfindungsgemäßen Lagerschalenkonstruktion gegenüber dem bekannten Nutlager bei jeweils gleicher LagerDimension und unter gleichen Randbedingungen bei großen Lagern wenigstens um das 2,5-fache und bei mittleren bis kleineren Lagern sogar um das bis zu 7-fache reduziert werden, wie den Werten aus der Tabelle zu entnehmen ist. Dem liegt insbesondere die Verbesserung des Verhältnisses aus Tiefe D zu Breite B des Schlitzes im Vergleich zum Tiefen-zu-Breiten-Verhältnis T/B bei der Nut zugrunde.

| **Kurbelwelienhauptlager** | | **PKW** | | | **LKW** | | |
|---|---|---|---|---|---|---|---|
| typische Abmessungen | | Minimum | Mittelwert | Maximum | Minimum | Mittelwert | Maximum |
| Wellendurchmesser | mm | 50 | 57,5 | 65 | 80 | 92,5 | 105 |
| Gesamtwanddicke D | mm | 2 | 2,25 | 2,5 | 2,5 | 3 | 3,5 |
| Lagerbreite | mm | 14 | 19 | 24 | 20 | 25 | 30 |
| Lagervolumen | mm³ | 2243 | 3937 | 6244 | 6381 | 11074 | 17607 |
| Lagergleitfläche | mm² | 1122 | 1750 | 2498 | 2553 | 3691 | 5030 |
| **Vergleichslager mit auslaufender Nut** | | | | | | | |
| Nuterstreckung in Umfangsrichtung | ° | 130 | 150 | 170 | 130 | 150 | 170 |
| Nuttiefe T | mm | 1,2 | 1,45 | 1,7 | 1,4 | 1,9 | 2,4 |
| Nutbreite B | mm | 3 | 4,5 | 6 | 4 | 6 | 8 |
| Nutvolumen mit Anfangsradius = 20 mm | mm³ | 170 | 418 | 856 | 448 | 1231 | 2707 |
| Hydraulischer Durchmesser (dh) | mm | 1,71429 | 2,19328 | 2,64935 | 2,07407 | 2,88608 | 3,69231 |
| Öldurchfluß | L/min | 2,34 | 2,58 | 3,02 | 3,06 | 3,87 | 4,95 |
| Strömungsgeschwindigkeit | mm/s | 10833,33 | 6590,04 | 4934,64 | 9107,14 | 5657,89 | 4296,88 |
| Reynoldszahl | -- | 3223,91 | 2509,10 | 2269,51 | 2376,68 | 2054,59 | 1996,25 |
| Strömungszustand | -- | Turbulent | Turbulent | Laminar | Turbulent | Laminar | Laminar |
| Verhältnis T/B der Nut | -- | 0,40000 | 0,32222 | 0,28333 | 0,35000 | 0,31667 | 0,30000 |
| Beiwert (phi) | -- | 1,02559 | 1,08252 | 1,11656 | 1,06055 | 1,08714 | 1,10149 |
| Rohrreibungszahl (lambda) | -- | 0,04199 | 0,04471 | 0,03149 | 0,04532 | 0,03386 | 0,03531 |
| Druckverlust aus Rohrreibung dp | bar | 0,01300 | 0,00532 | 0,00223 | 0,01316 | 0,00365 | 0,00221 |
| Masse des Lagers (mL) | kg | 0,01631 | 0,02754 | 0,04202 | 0,04680 | 0,07726 | 0,11646 |
| Masse des Öls in der Nut (mO) | kg | 0,00016 | 0,00039 | 0,00079 | 0,00041 | 0,00111 | 0,00241 |
| Masse Öl / Masse Lager | -- | 1,0% | 1,4% | 1,9% | 0,9% | 1,4% | 2,1% |
| **Erfindungsgemäßes Lager mit Schlitz** | | | | | | | |
| Schlitzerstreckung in Umfangsrichtung | ° | 130 | 150 | 170 | 130 | 150 | 170 |
| Schlitzbreite B | mm | 3 | 4,5 | 6 | 4 | 6 | 8 |
| Schützvofumen | mm³ | 347 | 777 | 1474 | 922 | 2215 | 4434 |
| Hydraulischer Durchmesser (dh) | mm | 2,40000 | 3,00000 | 3,52941 | 3,07692 | 4,00000 | 4,86957 |
| Öldurchfluß | L/min | 2,34 | 2,58 | 3,02 | 3,06 | 3,87 | 4,95 |
| Strömungsgeschwindigkeit | mm/s | 6500,00 | 4246,91 | 3355,56 | 5100,00 | 3583,33 | 2946,43 |
| Reynoldszahl | -- | 2708,08 | 2211,73 | 2055,91 | 1974,47 | 1803,48 | 1805,30 |
| Strömungszustand | -- | Turbulent | Laminar | Laminar | Laminar | Laminar | Laminar |
| Verhältnis D/B des Schlitzes | -- | 0,66667 | 0,50000 | 0,41667 | 0,62500 | 0,50000 | 0,43750 |
| Beiwert (phi) | -- | 0,91847 | 0,97153 | 1,01518 | 0,92822 | 0,97153 | 1,00299 |
| Rohrreibungszahl (lambda) | -- | 0,04386 | 0,02811 | 0,03160 | 0,03009 | 0,03448 | 0,03556 |
| Druckverlust aus Rohrreibung dp | bar | 0,00355 | 0,00103 | 0,00079 | 0,00187 | 0,00109 | 0,00080 |
| Masse des Lagers (mL) | kg | 0,01518 | 0,02528 | 0,03815 | 0,04352 | 0,07066 | 0,10510 |
| Masse des Öls in der Nut (mO) | kg | 0,00028 | 0,00062 | 0,00117 | 0,00074 | 0,00177 | 0,00354 |
| Masse Öl / Masse Lager | -- | 1,8% | 2,4% | 3,1% | 1,7% | 2,5% | 3,4% |

### Bezugszeichenliste

- 10' - 10"": Schlitz
- 11: Gleitfläche
- 12: Freilegung
- 13: Verjüngung, konischer Abschnitt
- 14, 14': umfängliches Ende des Schlitzes
- 15: Steg
- 16, 16' und 16": Verjüngung, Einschnürung
- 17, 17': Aufweitung
- 20: Kurbelwelle
- 22: Wellenzapfen
- 24: Kurbelwellenhauptlager
- 26: Obere Gleitlagerschale
- 28: Untere Gleitlagerschale
- 38: Hubzapfen
- 44: Verbindungsbohrung
- 46: Bohrungsabschnitt
- 48: Pleuel
- 50: Großes Pleuelauge
- 52, 54: Teilflächen

- α: Winkelmaß der Schlitzlänge
- β: Winkelmaß des Abstands zwischen Anfang der Verjüngung und Gleitlagerschalenende

- B: Breite des Schlitzes
- D: Materialstärke, Dicke der Gleitlagerschale
- F_{S}: Flächenanteil des Schlitzes
- F_{G}: Gesamtgleitfläche

- F_{St}: Flächenanteil der Stege

## Patentansprüche

1. Halbzylindrische Gleitlagerschale für ein Kurbelwellenhauptlager (24) mit einem sich in Umfangsrichtung über einen Winkel von 90 bis 170° erstreckenden, an beiden umfänglichen Enden der Gleitlagerschale (26) geschlossenen und die Gleitlagerschale radial durchsetzenden Schlitz (10) und einer ansonsten ölnutfreien Gleitfläche (11) auf ihrer Innenseite, **dadurch gekennzeichnet,**
**dass** der Schlitz auf wenigstens eines seiner beiden umfänglichen Enden (14) in Form eines konischen Bereiches zulaufend und/oder auf den Scheitelpunkt der Gleitlagerschale zulaufend sich in axialer Richtung verjüngt.

2. Gleitlagerschale nach Anspruch 1, **dadurch gekennzeichnet,**
**dass** der Schlitz (10) sich in Umfangsrichtung über einen Winkel von 130 bis 165° erstreckt.

3. Gleitlagerschaie (26) nach Anspruch 1 oder 2 mit jeweils einer Freilegung (12) auf der Innenseite an jedem ihrer umfänglichen Enden, **dadurch gekennzeichnet,**
**dass** der Schlitz (10) in Umfangsrichtung vor beiden Freilegungen endet.

4. Gleitlagerschale (26) nach einem der Ansprüche 1 bis 3, **dadurch gekennzeichnet,**
**dass** die auf ein umfängliches Ende zulaufende Verjüngung (13) des Schlitzes (10) in einem Bereich von 30° bis 60° vor dem umfänglichen Ende der Gleitlagerschale (26) beginnt.

5. Gleitlagerschale (26) nach einem der vorstehenden Ansprüche, **dadurch gekennzeichnet,**
**dass** der Schlitz (10) an seinen beiden umfänglichen Enden (14) abgerundet ist.

6. Gleitlagerschale (26) nach einem der vorstehenden Ansprüche, **dadurch gekennzeichnet,**
**dass** der Schlitz (10) einen Flächenanteil F_{S} an der gesamten Gleitfläche F_{G} zwischen 12% und 28%, bevorzugt von 14% bis 25% einnimmt.

7. Gleitlagerschale (26) nach einem der vorstehenden Ansprüche, **dadurch gekennzeichnet,**
**dass** der Schlitz (10) durch einen oder mehrere Stege (15) überbrückt wird, wobei die Stege (15) in der Summe einen Flächenanteil F_{St} aufweisen, der nicht mehr als 20% und bevorzugt nicht mehr als 10% des Flächenanteils F_{S} des Schlitzes einschließlich der Stege beträgt.

8. Gleitlagerschale (26) nach Anspruch 7, **dadurch gekennzeichnet, dass** die Stege (15) in radialer Richtung flacher sind als die Materialstärke der Gleitlagerschale.

9. Gleitlagerschale (26) nach einem der vorstehenden Ansprüche, **dadurch gekennzeichnet,**
**dass** der Schlitz (10) eine maximale Breite B aufweist und das Verhältnis aus der maximale Breite B zu der Dicke D der Gleitlagerschale (26) von 1,5 bis 3,5 beträgt.

## Claims

1. Semi-cylindrical plain bearing shell for a main crankshaft bearing (24), comprising a slot (10) that extends in the circumferential direction over an angle of from 90 to 170°, is sealed at both circumferential ends of the plain bearing shell (26) and radially passes through the plain bearing shell, and an otherwise oil groove-free sliding surface (11) on its inside, **characterised in that** the slot tapers in the axial direction towards at least one of its two circumferential ends (14) in the form of a conical region and/or towards the vertex of the plain bearing shell.

2. Plain bearing shell according to claim 1, **characterised in that** the slot (10) extends in the circumferential direction over an angle of from 130 to 165°.

3. Plain bearing shell (26) according to either claim 1 or claim 2, comprising, on the inside thereof, an exposed region (12) at each of its circumferential ends, **characterised in that** the slot (10) ends in the circumferential direction before the two exposed regions.

4. Plain bearing shell (26) according to any one of claims 1 to 3, **characterised in that** the taper (13) of the slot (10) towards one circumferential end begins in a range of from 30° to 60° before the circumferential end of the plain bearing shell (26).

5. Plain bearing shell (26) according to any one of the preceding claims, **characterised in that** the slot (10) is rounded at both of its circumferential ends (14).

6. Plain bearing shell (26) according to any one of the preceding claims, **characterised in that** the slot (10) occupies a surface area proportion F_{S} of the total sliding surface F_{G} of between 12 % and 28 %, preferably from 14 % to 25 %.

7. Plain bearing shell (26) according to any one of the preceding claims, **characterised in that** the slot (10) is bridged by one or more ribs (15), the ribs (15) occupying a total surface area proportion F_{St} of no greater than 20 %, and preferably no greater than 10 %, of the surface area proportion F_{S} of the slot including the ribs.

8. Plain bearing shell (26) according to claim 7, **characterised in that** the ribs (15) are flatter in the radial direction than the material thickness of the plain bearing shell.

9. Plain bearing shell (26) according to any one of the preceding claims, **characterised in that** the slot (10) has a maximum width B and the ratio of the maximum width B to the thickness D of the plain bearing shell (26) is from 1.5 to 3.5.

## Revendications

1. Coquille de coussinet lisse semi-cylindrique pour un palier principal (24) de vilebrequin, avec une fente (10) s'étendant en direction périphérique sur un angle de 90 à 170°, fermée aux deux extrémités périphériques de la coquille de coussinet lisse (26) et traversant radialement la coquille de coussinet lisse, et avec une surface lisse (11) sur son côté intérieur, autrement dépourvue de rainure de lubrification,
**caractérisée en ce que** la fente, à au moins une de ses deux extrémités périphériques (14), se rétrécit en direction axiale en se terminant sous la forme d'une région conique et/ou en se terminant au sommet de la coquille de coussinet lisse.

2. Coquille de coussinet lisse selon la revendication 1, **caractérisée en ce que** la fente (10) s'étend en direction périphérique sur un angle de 130 à 165°.

3. Coquille de coussinet lisse (26) selon la revendication 1 ou 2 avec un dégagement respectif (12) sur le côté intérieur à chacune de ses extrémités périphériques, **caractérisée en ce que** la fente (10) se termine en direction périphérique avant les deux dégagements.

4. Coquille de coussinet lisse (26) selon l'une des revendications 1 à 3, **caractérisée en ce que** le rétrécissement (13) de la fente (10), lequel se termine à une extrémité périphérique, commence dans une zone de 30° à 60° avant l'extrémité périphérique de la coquille de coussinet lisse (26).

5. Coquille de coussinet lisse (26) selon l'une des revendications précédentes, **caractérisée en ce que** la fente (10) est arrondie à ses deux extrémités périphériques (14).

6. Coquille de coussinet lisse (26) selon l'une des revendications précédentes, **caractérisée en ce que** la fente (10) occupe une portion de surface F_{S} de la surface lisse totale F_{G} qui est comprise entre 12% et 28%, de préférence de 14% à 25%.

7. Coquille de coussinet lisse (26) selon l'une des revendications précédentes, **caractérisée en ce que** la fente (10) est enjambée par une ou plusieurs entretoises (15), sachant que les entretoises (15) occupent au total une portion de surface F_{St} qui ne dépasse pas 20% et de préférence 10% de la portion de surface F_{S} de la fente entretoises comprises.

8. Coquille de coussinet lisse (26) selon la revendication 7, **caractérisée en ce que** les entretoises (15) sont plus plates en direction radiale que l'épaisseur de matériau de la coquille de coussinet lisse.

9. Coquille de coussinet lisse (26) selon l'une des revendications précédentes, **caractérisée en ce que** la fente (10) présente une largeur maximale B, et le rapport de la largeur maximale B à l'épaisseur D de la coquille de coussinet lisse (26) est égal à 1,5 à 3,5.
